# EUROPEAN PATENT SPECIFICATION

(11) **EP 2 793 491 B1**
(45) Date of publication and mention of the grant of the patent: **20.11.2019**
(21) Application number: 13382136.3
(22) Date of filing: 15.04.2013
(51) Int. Cl.: H04W 4/00, H04W 12/06

(54) **Process for data transmission between a vehicle and a mobile device**
Verfahren zur Datenübertragung zwischen einem Fahrzeug und einer mobilen Vorrichtung
Procédé de transmission de données entre un véhicule et un dispositif mobile

(43) Date of publication of application: 22.10.2014
(73) Proprietor: Seat, S.A., 08760 Martorell - Barcelona (ES)
(72) Inventor: Banos, Victor, 08860 Barcelona (ES); Bayona, Teresa, 08700 Barcelona (ES)
(74) Representative: Elzaburu S.L.P.

(56) References cited:
- US-A1- 2010 082 784
- US-A1- 2010 241 857
- RAINER STEFFEN ET AL: "Near Field Communication (NFC) in an Automotive Environment", NEAR FIELD COMMUNICATION (NFC), 2010 SECOND INTERNATIONAL WORKSHOP ON, IEEE, PISCATAWAY, NJ, USA, 20 April 2010 (2010-04-20), pages 15-20, XP031683705, ISBN: 978-0-7695-3998-0

## Description

### PURPOSE OF THE INVENTION

The purpose of this patent application is a process for data transmission between a vehicle and a mobile device that incorporates significant innovations and advantages.

This invention refers more specifically to a process for selecting the method for data transmission based on whether or not the vehicle is equipped with the corresponding means. Thus, after positioning the mobile device inside the vehicle, a data transmission via NFC (Near Field Communication) method is established between the mobile device and the vehicle, entering a data transmission mode via Wi-Fi (Wireless Fidelity) based on the presence of a Wi-Fi router in the vehicle and the corresponding means installed on the mobile device. Consequently, the process enables authentication and auto-configuration of data transmission means via Wi-Fi by using data transmission means via NFC.

The purpose of the invention is to increase data transmission performance between a vehicle and a mobile device, particularly in terms of the amount of data transmitted by unit of time and the distance these data are transmitted.

The corresponding device is also the purpose of this invention.

### BACKGROUND OF THE INVENTION

Modern vehicles offer a number of driver assistance systems, communication and multimedia applications, including a mobile phone interface, music and language reproduction systems, navigation systems, etc. Normally the car screen is the device that displays the information present and/or received in the vehicle. This is preferably located in the car dashboard or central console, and can therefore be used by both the driver and the passenger.

However, with the development of devices such as mobile phones, tablets and GPS navigation systems, the screens of these devices can be used as interfaces with the driver.

Therefore, this represents an alternative to the vehicle's own screen, and also allows the user to acquire a vehicle without the extra screen in the dashboard, thus reducing the cost, because the information usually displayed on the vehicle screen can now be shown on the mobile device. Consequently, a method for transmitting data quickly and reliably between the vehicle and an external mobile device is required, so that said device can offer the services of the vehicle's own screen at a given moment.

There are currently a range of solutions for data transmission between a vehicle and a mobile device. Thus, in the state-of-the-art document WO2012019698, a system for data transmission to a motor vehicle is described, wherein said motor vehicle has an NFC interface to establish an NFC communication link to a mobile phone, and this phone has a memory that stores a balance. On the other hand, state-of-the-art document EP2124177 describes a car reader and a method for simplifying mobile commerce for the car user. The reader, which is positioned inside the car, can read purchase data from instruments such as contactless credit cards, or smart cards such as credit cards or mobile phones with NFC. The reader is also connected to a wireless communication interface of the car, which has the capacity to transmit data from the purchasing instrument to a point of sale. Additionally, the state-of-the-art document "NFC in an automotive environment" (International Workshop IEEE) (2010-04-20), describes experiences implementing NFC technologies in an automotive context, in which it is explored in a real car environment different software and hardware architecture for setting up a prototype.

Consequently, there remains a need to develop a process for data transmission between a vehicle and a mobile device, which establishes a communication that offers the sufficient performance to allow the mobile device to display the same information to the user that would be displayed on the vehicle screen.

### DESCRIPTION OF THE INVENTION

The purpose of this invention is to a process for data transmission between a vehicle and a mobile device, such that with data transmission means via NFC, and potentially the means for data transmission via Wi-Fi, the process enables authentication and auto-configuration of data transmission means via Wi-Fi through the data transmission means via NFC. The corresponding device is also the purpose of this invention.

The solution to the purpose of this invention can be reached through a process with the features of claim 1 and through a device with the features of claim 13.

Therefore, an object of this invention is a process for data transmission between a vehicle and a mobile device and more specifically, in an initial phase, through a data transmission channel via NFC, and subsequently switching to a data transmission channel via Wi-Fi. As a prior requisite, the user places his or her mobile device in a specific support located in the central console of the vehicle. This support contains the means to detect the mobile device and to communicate via NFC. After establishing this initial connection, the mobile device sends information to the NFC means present in the vehicle - the action can also be reversed, with the vehicle sending information to the mobile device -, and in particular to the receiving and/or broadcasting means inside the support. After establishing this communication, the NFC means send a signal through the communication means present in the vehicle towards the Wi-Fi means. The Wi-Fi means, if any, are activated with the configuration information received from the NFC means. After establishing this communication via Wi-Fi means between the vehicle and the mobile device, the NFC means go on hold to prevent energy consumption. Only the data necessary for displaying information as it would be displayed on the vehicle screen are sent to the mobile device. For this purpose, there are some filters that screen the data transmitted to the mobile device from all the data present in the vehicle. If the aforementioned communication cannot be established using Wi-Fi means, due to the absence of such means in the vehicle, the communication is maintained via NFC.

It should be mentioned that an NFC data transmission channel is limited, because it cannot support the wealth of data that can be supported by a data transmission channel via Wi-Fi. The data transmission channel via NFC means that less information can be displayed on the mobile device than would be represented on the vehicle screen. Therefore, using NFC, it would only be possible to send information such as the temperature, the name of a song, etc. In other words, information that does not change quickly, leading to a limited capacity for interaction between the user and the vehicle.

This invention provides the advantages and solves the problems mentioned above, also providing other additional benefits that will become evident from the following detailed description.

Thus, the process for data transmission between a vehicle and a mobile device of this invention, wherein the vehicle has at least first wireless data transmission means and potentially second wireless data transmission means, comprises the following steps:
- establish an initial wireless connection between the vehicle's first wireless data transmission means and the mobile device in response to the vehicle detecting the presence of the mobile device,
- verification, using the first wireless data transmission means, of the availability of the second wireless data transmission means in the vehicle,
- if the second wireless data transmission means are available in the vehicle, these means receive the mobile device configuration data from the first wireless data transmission means, thus establishing a second wireless connection between the second wireless data transmission means in the vehicle and the mobile device,
achieving in this way that the vehicle has available two parallel channels of wireless communication, allowing specialisation of each in the transmission of a specific kind of data, data corresponding to certain functions, or certain data rate requirements. Furthermore, after configuration, having numerous communication channels running in parallel offers advantages in terms of communication reliability, allowing establishment of redundancies, checks and, if any of the channels is not working properly, redirection of data transmission to another channel, meeting its specifications to the maximum extent possible.

More particularly, the wireless connection between the second data transmission means and the mobile device involves sending data wirelessly from the second data transmission means to the mobile device. This particularises the second wireless data transmission means as that specialising in transmitting the bulk of the data, after an initial authentication and configuration phase using wirelessly the first data transmission means. Thus, the first means act as a filter for the second means, such that these second means are not activated until the first means signal their presence.

Advantageously, the first wireless data transmission means are short range and narrow-bandwidth means, and the second wireless data transmission means are long-range and wide-bandwidth. Through the second data transmission means, improved communication performance is achieved in terms of data transmission rate, and of the distance over which the data are transmitted correctly. Additionally, and given the greater scope of the second means, the vehicle, as an entity that receives and transmits data, is also visible to other means external to it. Thus, pursuant to this invention, the fact that the connection is only made when activated using the first means, which are not visible from outside the vehicle and already with predefined activation parameters, the risk of unwanted interferences in the vehicle systems from external data transmission means is reduced.

According to another stage of the process of the invention, if the second data transmission means are not available in the vehicle wirelessly, then the wireless connection between the vehicle and the mobile device is established using the first wireless data transmission means, thus achieving flexibility in terms of communication between the vehicle and the mobile device, whether the user has chosen not to activate the second transmission means, or because the user does not have second transmission means in the vehicle.

More specifically, the first wireless data transmission means use NFC, and the second wireless data transmission means use Wi-Fi. In this way, communication standards that are widely available on the market are used, and that are compatible with the majority of mobile devices available.

A preferred embodiment of the process of the invention would involve the connection between the first wireless data transmission means and the second wireless data transmission means being made using cable, thus allowing that the second transmission means would not need to be activated to receive information wirelessly, possibly receiving instead the activation signal through an alternative route, i.e. through the data bus via cable from the vehicle's internal communication means between all its subsystems.

The process for data transmission between a vehicle and a mobile device of this invention additionally comprises the stage wherein the mobile device displays vehicle information. Thus, after the prior steps of authenticating, configuring and activating the second wireless data transmission means have been completed, the device starts to show the user all the information and functions he or she can view on the vehicle's screen, offering in this way an alternative channel of communication between the user and his or her vehicle.

According to another aspect of the invention, the mobile device selects the information to be received and the frequency with which it is received. In this way, said mobile device can regulate, according to its own specifications, o those determined by the user when using it, the kinds of information received and the periodicity of updates thereof.

In a preferred embodiment of the process of this invention, the first wireless data transmission means and/or the second wireless data transmission means periodically check for the presence of the mobile device in the vehicle. In this way, if the user removes the mobile device from its support, or switches it off, or any other similar circumstance, the wireless data transmission means will not be operating unnecessarily and at risk of external interferences affecting the vehicle.

According to another aspect of the invention, the first wireless data transmission means comprise an electronic device in a holder ready inside the vehicle for the mobile device. This electronic device will be responsible for capturing the presence of the aforementioned mobile device in the support holder and for reading the information transmitted by said mobile device, thereby initiating the whole process described by this invention.

Advantageously, the first wireless data transmission means configure the second wireless data transmission means using the data transmitted to the aforementioned electronic device from the mobile device. This electronic device will ideally include an NFC antenna so that it can transmit and/or receive data to and/or from the NFC means present in said mobile device.

According to another aspect of the invention, the electronic device comprises a two-dimensional code. This two-dimensional code is ideally printed on the support located on the vehicle's dashboard. This means that a mobile device that does not have the means to transmit data using NFC is able, by photographically capturing the two-dimensional code, to receive the configuration data from the vehicle in this way to proceed to a Wi-Fi mode for data transmission.

This invention also refers to a device for data transmission between a vehicle and a mobile device, which comprises at least first wireless data transmission means and potentially second wireless data transmission means, characterised in that is is configured pursuant to the following steps:
- establishing an initial wireless connection between the vehicle's first wireless data transmission means and the mobile device in response to the vehicle detecting the presence of the mobile device,
- verification, using the first wireless data transmission means, of the availability of the second wireless data transmission means in the vehicle,
- if the second wireless data transmission means are available in the vehicle, these means receive the mobile device configuration data from the first data transmission means wirelessly, thus establishing a second wireless connection between the second wireless data transmission means in the vehicle and the mobile device.

More specifically, the device is configured so that the wireless connection between the second wireless data transmission means and the mobile device involves sending data from the second wireless data transmission means to the mobile device.

Advantageously, the device is configured so that the first wireless data transmission means are short range and narrow-bandwidth means, and the second wireless data transmission means are long-range and wide-bandwidth.

According to another aspect of the invention, the device is configured so that if the second data transmission means are not available wirelessly, the wireless connection between the vehicle and the mobile device will be established using the first data transmission means wirelessly.

The advantages offered by this device are the same as those mentioned above for the process implemented in it.

In the attached drawings, a structure formed according to the invention is shown by means of non-limiting example, of a process for data transmission between a vehicle and a mobile device.

Additional features and advantages of the procedure and/or device of this invention will become clear from the description of a preferred but not exclusive embodiment, which is illustrated in the attached drawings, in which:

### BRIEF DESCRIPTION OF THE DRAWINGS

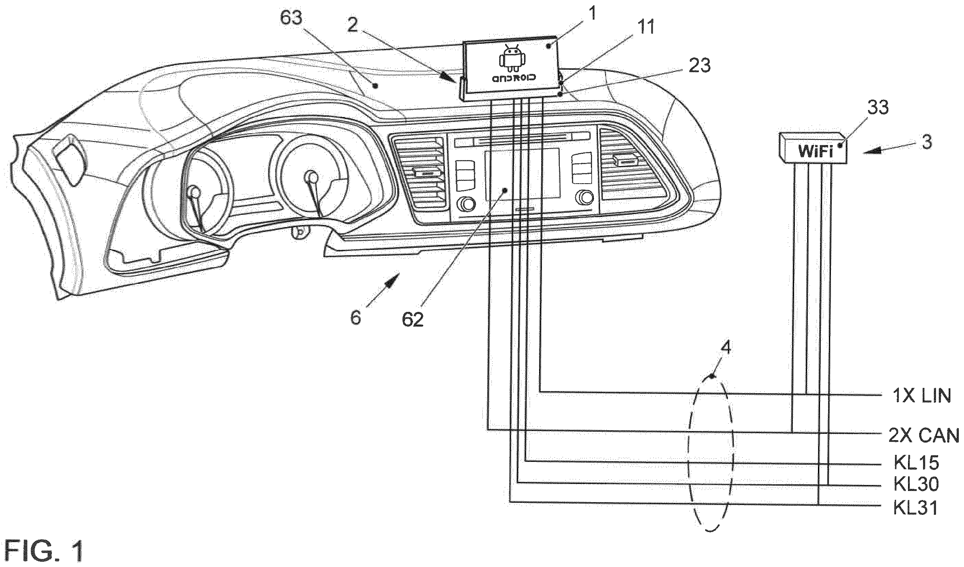

Figure 1.- A general front view, from the vehicle dashboard perspective including the mobile device support, in accordance with this invention;

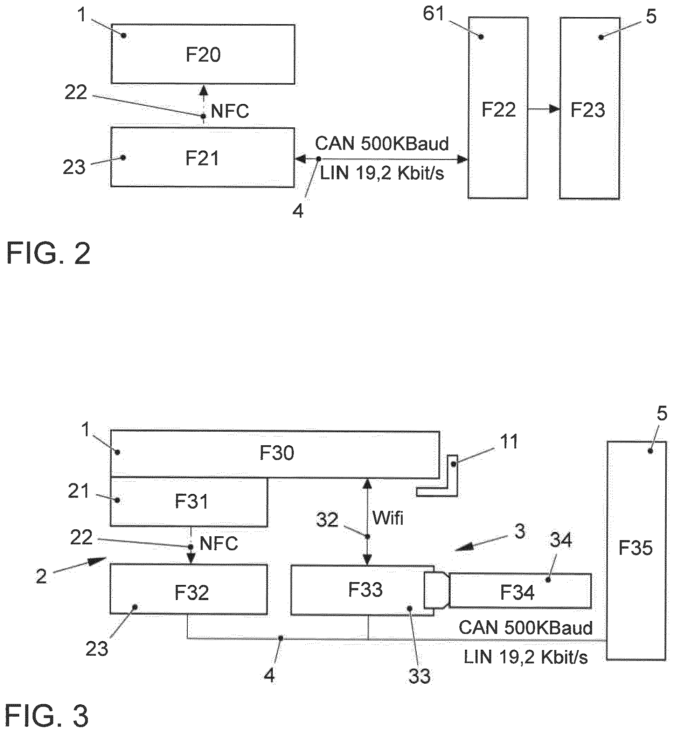

Figure 2.- A diagram representation of the elements and systems involved in the NFC data transmission scenario, in accordance with this invention;
Figure 3.- A diagram representation of the elements and systems involved in the NFC and Wi-Fi data transmission scenario, in accordance with this invention;

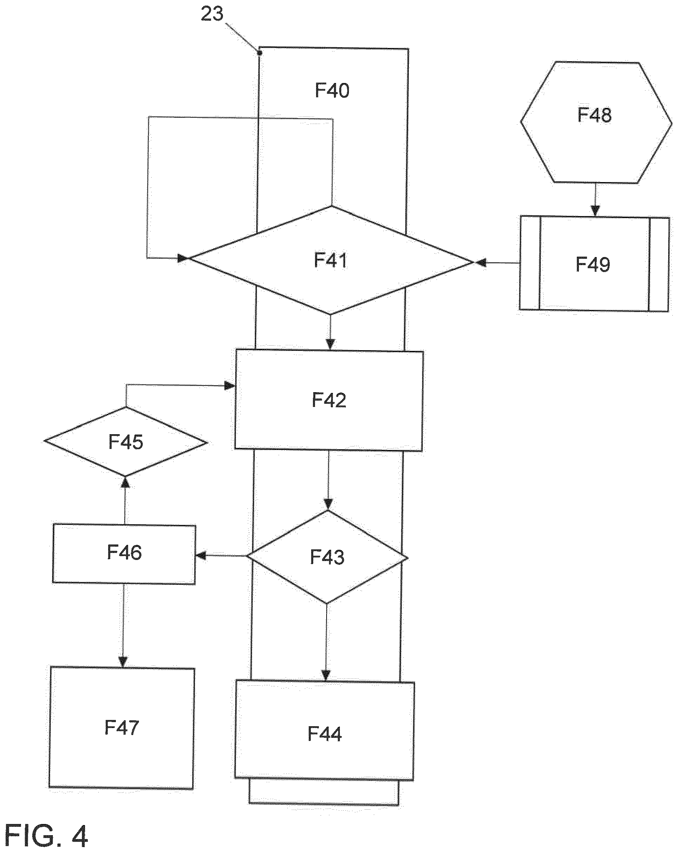

Figure 4.- A representation of the NFC data transmission activation process, in accordance with this invention;

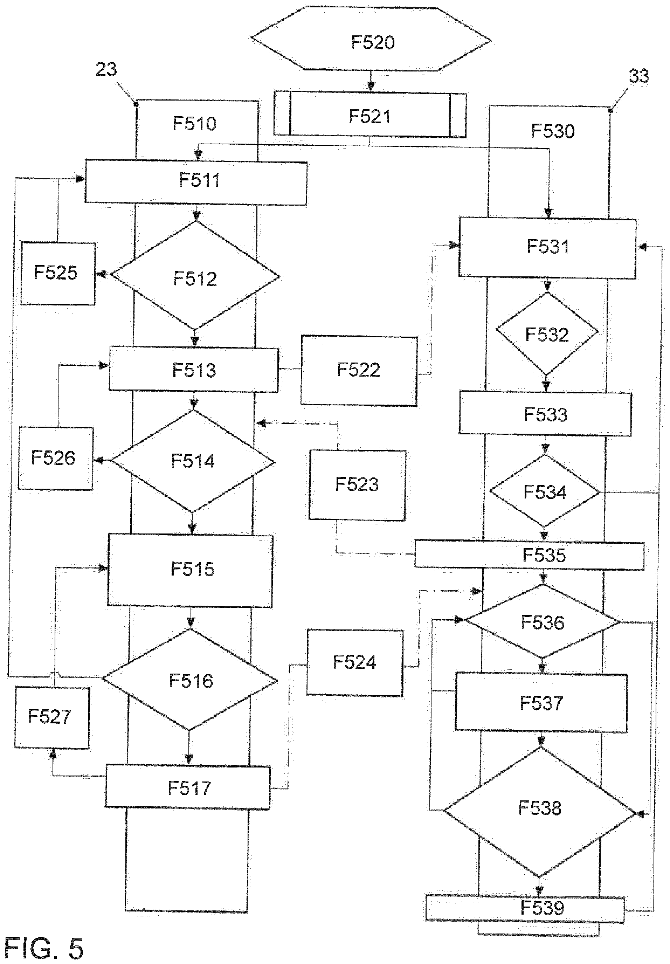

Figure 5.- A representation of the Wi-Fi system configuration process using NFC, in accordance with this invention;

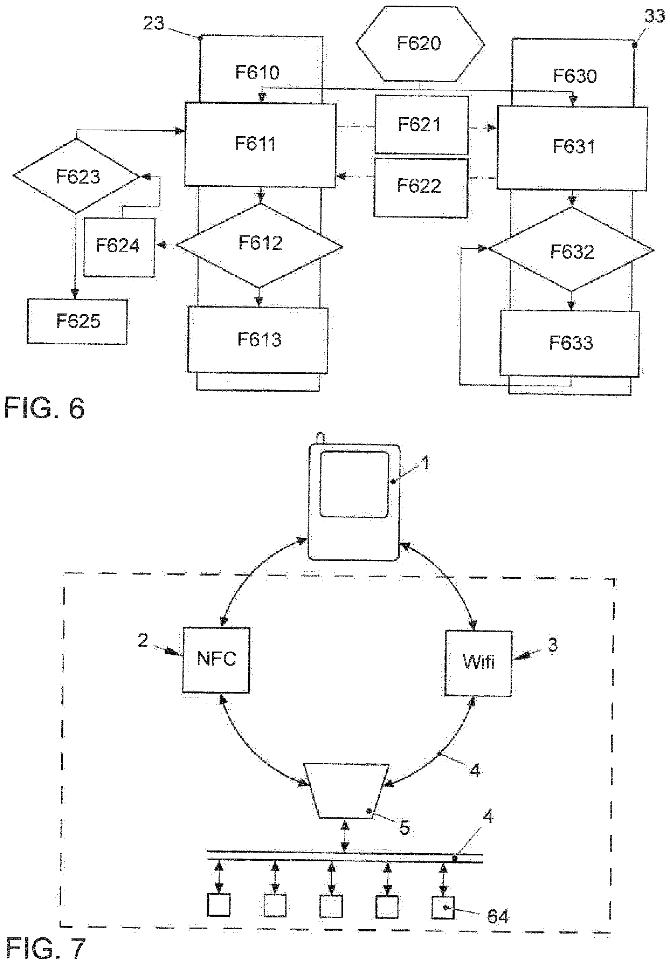

Figure 6.- A representation of the operation mode selection process, either using NFC or Wi-Fi, in accordance with this invention;
Figure 7.- A schematic representation of the elements and systems involved in the data transmission scenario between the mobile device and the vehicle, in accordance with this invention;

### DESCRIPTION OF A PREFERRED EMBODIMENT

In light of the aforementioned figures, and according to the numbering adopted, an example of preferred embodiment for the invention can be seen, comprising the parts and elements that are described in detail below: The process for data transmission between a vehicle (6) and a mobile device (1), establishes, in an initial phase, an NFC (22) data transmission channel, and then using a Wi-Fi (32) data transmission channel. As a prior requisite, the user places his or her mobile device (1) in a specific support (11) located in the central console of the vehicle (6). This support (11) contains the means to detect (21) the mobile device (1) and to communicate via NFC (22). After establishing this initial connection, the mobile device (1) sends information to the NFC means (23) present in the vehicle (6) - the action can also be reversed, with the vehicle (6) sending information to the mobile device (1) -, and in particular to the receiving and/or broadcasting means (21) inside the support (11). After establishing this communication, the NFC means (23) sends a signal through the communication means (4) present in the vehicle (6) towards the Wi-Fi means (33). The Wi-Fi means (33), if present, are activated with the configuration information received from the NFC means (23). After establishing this communication via Wi-Fi means (33) between the vehicle (6) and the mobile device (1), the NFC means (23) go on hold to prevent energy consumption. Only the data necessary for displaying information as it would be displayed on the vehicle (6) screen (62) is sent to the mobile device (1). For this purpose, there are some filters (5) that screen the data transmitted to the mobile device from all the data present in the vehicle (6). Alternatively, if the aforementioned communication cannot be established using Wi-Fi means (32), due to the absence of such means in the vehicle (6), the communication is maintained using NFC means (22).

Thus, as can be seen in the figures, the process for data transmission between a vehicle (6) and a mobile device (1) of this invention presents at least first wireless data transmission means (2) and potentially second wireless data transmission means (3), comprising the following steps:
- establish an initial wireless connection (22) between the vehicle's (6) first wireless data transmission means (2) and the mobile device (1) in response to the vehicle (6) detecting the presence of the mobile device (1),
- verification, using the first wireless data transmission means (2), of the availability of the second wireless data transmission means (3) in the vehicle (6),
- if the second wireless data transmission means (3) are available in the vehicle (6), these means receive the mobile device (1) configuration data from the first wireless data transmission means (2), thus establishing a second wireless connection (32) between the second wireless data transmission means (3) in the vehicle (6) and the mobile device (1).

More specifically, the wireless connection (32) between the second wireless data transmission means (3) and the mobile device (1) consists of sending of data from the second wireless data transmission means (3) to the mobile device (1).

It should be mentioned that the first wireless data transmission means (2) are short range and narrow-bandwidth means, and the second wireless data transmission means (3) are long-range and wide-bandwidth.

If the second wireless data transmission means (3) are not available in the vehicle (6), the wireless connection between the vehicle (6) and the mobile device (1) is established using the first wireless data transmission means (2).

More specifically, the first wireless data transmission means (2) uses NFC, and the second wireless data transmission means (3) uses Wi-Fi. Therefore, for the NFC scenario, the connection between the NFC controller (23) and the mobile device (1) is via NFC, with the NFC transmission protocol being P2P using NDEF messages. Particularly, if there is no Wi-Fi controller (33) in the vehicle (6), the NFC controller (23) sends messages for a period e.g. 1 second. If it does not receive a response, it enters a state where it only receives information through NFC. The communication between the mobile device (1) and the NFC controller (23) will be through NFC tags emulation or through a type 1 physical tag. For the Wi-Fi scenario, the connection between the Wi-Fi controller (33) and the mobile device (1) will use an IEEE802.11n connection and UART standard point-to-point connection. In a working example, the Wi-Fi controller (33) could be positioned in the vehicle's (6) glove compartment. The NFC controller (23) in turn could be located beneath the dashboard (63), with the NFC antenna next to the NFC controller (23) or separated and placed in the support holder (11).

It should be mentioned that the connection between the first wireless data transmission means (2) and the second wireless data transmission means (3) is made via cable (4). The connectivity between the Wi-Fi controller (33) and the NFC controller (23) is through CAN at 500Kbaud.

This process ensures that the mobile device (1) displays vehicle (6) information, the mobile device (1) being able, in an embodiment of the invention, to select the information to be received and choose how often it is received.

More specifically, the first wireless data transmission means (2) and/or the second wireless data transmission means (3) regularly check for the presence of the mobile device (1) in the vehicle (6). The Wi-Fi controller (33) can use, in a preferred use, an interrupter (34) to enter an engineering state that creates a Wi-Fi network with predefined parameters and that will keep the access service to the internal communication means active through the vehicle's (6) cable (4).

It should be noted that the first wireless data transmission means (2) include an electronic device (21) in a holder (11) available in the vehicle (6) for the mobile device (1). This electronic device (21) will include, in an embodiment example, the NFC antenna, being separate from the NFC controller (23).

More specifically, the first wireless data transmission means (2) configure the second wireless data transmission means (3) using data transmitted to the aforementioned electronic device (21) from the mobile device (1). The NFC controller (23) captures information from the mobile device (1), either using a chip or a tag, or via an electronic circuit with broadcasting response capacity. Thus, in the Wi-Fi scenario, the NFC controller (23) can configure the Wi-Fi connection (32), in an embodiment example, using the data from an NFC tag. The presence of this tag in the NFC controller (23) reader allows it to read a configuration and also maintain a Wi-Fi connection (32). In another embodiment example, the electronic device (21) may comprise a two-dimensional code, of the so-called QR-code type. This two-dimensional code can be placed on the support (11) itself with the holder for the mobile device (1).

As regards the device for data transmission between a vehicle (6) and a mobile device, it comprises at least first wireless data transmission means (2) and potentially second wireless data transmission means (3), and is configured so that it follows the following steps:
- establishing an initial wireless connection (22) between the vehicle's (6) first wireless data transmission means (2) and the mobile device (1) in response to the vehicle (6) detecting the presence of the mobile device (1),
- verification, using the first wireless data transmission means (2), of the availability of the second wireless data transmission means (3) in the vehicle (6),
- if the second wireless data transmission means (3) is available in the vehicle (6), these means receive the mobile device (1) configuration data from the first wireless data transmission means (2), thus establishing a second wireless connection (32) between the second wireless data transmission means (3) in the vehicle (6) and the mobile device (1).

More specifically, the device is configured so that the wireless connection (32) between the second wireless data transmission means (3) and the mobile device (1) involves sending data from the second wireless data transmission means (3) to the mobile device (1).

On the other hand, the device is configured so that the first wireless data transmission means (2) are short range and narrow-bandwidth means, and the second wireless data transmission means (3) are long-range and wide-bandwidth.

More specifically, the device is configured so that if the second data transmission means (3) are not available wirelessly, then the wireless connection between the vehicle (6) and the mobile device (1) will be established using the first wireless data transmission means (2).

The details, shapes, dimensions and other accessory elements, in addition to the components used in the implementation of said process for data transmission between a vehicle and a mobile device, can be suitably replaced by others that are equivalent and that do not depart from the essence of the invention or from the scope defined by the claims included in the following list.

### List of reference signs

(1) Mobile device
(11) Support with holder for a mobile device
(2) First wireless data transmission means (via NFC)
(21) Electronic device (broadcast/reception via NFC) in support with holder for a mobile device
(22) Initial wireless connection (via NFC)
(23) NFC controller
(3) Second wireless data transmission means (via Wi-Fi)
(32) Second wireless connection (via Wi-Fi)
(33) Wi-Fi controller
(34) Wi-Fi interrupter engineer mode
(4) Internal vehicle communication means (via cable)
(5) Filter
(6) Vehicle
(61) Vehicle radio
(62) Vehicle screen
(63) Vehicle dashboard
(64) Other vehicle systems

### List of references used as text abbreviation within the figures

- F20: Mobile phone
- F21: NFC box
- F22: Radio
- F23: Gateway

- F30: Mobile phone
- F31: NFC Tag
- F32: NFC box
- F33: Wi-Fi box
- F34: Interrupter
- F35: Gateway

- F40: NFC box
- F41: Is there a mobile device in "push" mode?
- F42: The authentication process begins as PID
- F43: Authenticated?
- F44: Receive and forward via NDEF to mobile
- F45: Retry >5?
- F46: Timeout 1s
- F47: NDEF to mobile indicating connection failure
- F48: User places mobile in the dock
- F49: PID mode

- F510: NFC box
- F511: Read NPP configuration or TAG type 1
- F512: Is the information accurate?
- F513: Send configuration
- F514: Has confirmation been received?
- F515: Check if the device is within range.
- F516: Is the device within range?
- F517: Send Heartbeat

- F520: User places mobile in the dock
- F521: Configuration mode
- F522: Wi-Fi configuration
- F523: Status message
- F524: Status message
- F525: Timeout 1s
- F526: Timeout 30s
- F527: Timeout 5s

- F530: Wi-Fi box
- F531: Receive Wi-Fi configuration
- F532: Is it valid?
- F533: Configure and activate Wi-Fi
- F534: Has Wi-Fi been activated?
- F535: Confirm active Wi-Fi
- F536: Has heartbeat been received?
- F537: Update the most recent heartbeat instant
- F538: Does the time without receiving heartbeat exceed the timeout?
- F539: Disable Wi-Fi

- F610: NFC box
- F611: Check Wi-Fi module existence
- F612: Does the module exist?
- F613: Wi-Fi configuration mode

- F620: User starts vehicle
- F621: Status message
- F622: Status message
- F623: Retry > 5?
- F624: Timeout 1s
- F625: PID mode

- F630: Wi-Fi box
- F631: Confirm Wi-Fi module existence
- F632: Engineering mode?
- F633: Engineering mode

- PID: Portable Infotainment Device

## Claims

1. A process for data transmission between a first wireless data transmission means (2) and/or a second wireless data transmission means (3) of a vehicle (6) and a mobile device (1); **characterised in that** the process comprises the following steps:
- detecting the mobile device (1) in a support (11) of the vehicle (6);
- establishing an initial wireless connection (22) between the first wireless data transmission means (2) and the mobile device (1) in response to detecting the mobile device (1) over the support (11);
- receiving information, including configuration information, over the initial wireless connection (22)
from the mobile device (1);
- transmitting the received configuration information from the first wireless data transmission means (2) to the second wireless data transmission means (3) using a further connection (4);
- establishing a second wireless connection (32) between the second wireless data transmission means (3) and the mobile device (1) using the received configuration information , if the second wireless data transmission means (3) is available; and
- after establishing the second wireless connection, the first wireless data transmission means (2) going on hold.

2. The process according to claim 1, **characterised in that** the process comprising the step of sending of data from the second wireless data transmission means (3) to the mobile device (1) over the established second wireless connection (32).

3. The process according to claim 1, **characterised in that** the first wireless data transmission means (2) are short range and narrow-bandwidth means, and the second wireless data transmission means (3) are long-range and wide-bandwidth.

4. The process according to claim 1 or 3, **characterised in that** the process comprising the step of maintaining the wireless connection between the first wireless data transmission means (2) and the mobile device (1), if the second data transmission means (3) are not available.

5. The process according to claim 3, **characterised in that** the first wireless data transmission means (2) use NFC, and the second wireless data transmission means (3) uses Wi-Fi.

6. The process according to claim 1, **characterised in that** the further connection between the first wireless data transmission means (2) and the second wireless data transmission means (3) is made via cable (4).

7. The process according to claim 1 or 2, **characterised in that** the process comprising the step of displaying information of the vehicle (6) by means of the mobile device (1).

8. The process according to claim 7, **characterised in that** the process comprising the step of selecting by means of the mobile device (1), the information to be received and how often this information is received.

9. The process according to claim 1, **characterised in that** the process comprising the step of regularly checking, by means of the first wireless data transmission means (2) and/or the second wireless data transmission means (3), the presence of the mobile device (1) in the vehicle (6).

10. The process according to claim 1, **characterised in that** the first wireless data transmission means (2) comprise an electronic device (21) in the support (11) ready in the vehicle (6) for the mobile device (1).

11. The process according to claim 10, **characterised in that** the process comprising the step of configuring by means of the first wireless data transmission means (2), the second wireless data transmission means (3) using data transmitted to the electronic device (21) from the mobile device (1).

12. The process according to claim 11, **characterised in that** the electronic device (21) comprises a two-dimensional code

13. A device for data transmission between a first wireless data transmission means (2) or a second wireless data transmission means (3) of a vehicle (6) and a mobile device (1); **characterized in that** the device is adapted to perform the process of claims 1-12.

## Patentansprüche

1. Verfahren zur Datenübertragung zwischen einem ersten drahtlosen Datenübertragungsmittel (2) und/oder einem zweiten drahtlosen Datenübertragungsmittel (3) eines Fahrzeugs (6) und einer mobilen Vorrichtung (1); **dadurch gekennzeichnet, dass** das Verfahren die folgenden Schritte umfasst:
- Detektieren der mobilen Vorrichtung (1) in einem Träger (11) des Fahrzeugs (6);
- Herstellen einer anfänglichen drahtlosen Verbindung (22) zwischen dem ersten drahtlosen Datenübertragungsmittel (2) und der mobilen Vorrichtung (1) als Reaktion auf ein Detektieren der mobilen Vorrichtung (1) über dem Träger (11);
- Empfangen von Information, einschließlich Konfigurationsinformation, über die anfängliche drahtlose Verbindung (22) von der mobilen Vorrichtung (1);
- Übertragen der empfangenen Konfigurationsinformation von dem ersten drahtlosen Datenübertragungsmittel (2) an das zweite drahtlose Datenübertragungsmittel (3) unter Verwendung einer weiteren Verbindung (4);
- Herstellen einer zweiten drahtlosen Verbindung (32) zwischen dem zweiten drahtlosen Datenübertragungsmittel (3) und der mobilen Vorrichtung (1) unter Verwendung der empfangenen Konfigurationsinformation, wenn das zweite drahtlose Datenübertragungsmittel (3) verfügbar ist; und
- nach dem Herstellen der zweiten drahtlosen Verbindung wird das erste drahtlose Datenübertragungsmittel (2) auf Halten geschaltet.

2. Verfahren nach Anspruch 1, **dadurch gekennzeichnet, dass** das Verfahren den Schritt des Sendens von Daten von dem zweiten drahtlosen Datenübertragungsmittel (3) an die mobile Vorrichtung (1) über die hergestellte zweite drahtlose Verbindung (32) umfasst.

3. Verfahren nach Anspruch 1, **dadurch gekennzeichnet, dass** das erste drahtlose Datenübertragungsmittel (2) ein Mittel für kurze Reichweite und schmale Bandbreite ist und das zweite drahtlose Datenübertragungsmittel (3) für lange Reichweite und große Bandbreite ist.

4. Verfahren nach Anspruch 1 oder 3, **dadurch gekennzeichnet, dass** das Verfahren den Schritt des Aufrechterhaltens der drahtlosen Verbindung zwischen dem ersten drahtlosen Datenübertragungsmittel (2) und der mobilen Vorrichtung (1), wenn das zweite Datenübertragungsmittel (3) nicht verfügbar ist, umfasst.

5. Verfahren nach Anspruch 3, **dadurch gekennzeichnet, dass** das erste drahtlose Datenübertragungsmittel (2) NFC verwendet und das zweite drahtlose Datenübertragungsmittel (3) Wi-Fi verwendet.

6. Verfahren nach Anspruch 1, **dadurch gekennzeichnet, dass** die weitere Verbindung zwischen dem ersten drahtlosen Datenübertagungsmittel (2) und dem zweiten drahtlosen Datenübertragungsmittel (3) über Kabel (4) erfolgt.

7. Verfahren nach Anspruch 1 oder 2, **dadurch gekennzeichnet, dass** das Verfahren den Schritt des Anzeigens von Information des Fahrzeugs (6) mittels der mobilen Vorrichtung (1) umfasst.

8. Verfahren nach Anspruch 7, **dadurch gekennzeichnet, dass** das Verfahren den Schritt des Auswählens der zu empfangenen Information und wie oft diese Information empfangen wird mittels der mobilen Vorrichtung (1) umfasst.

9. Verfahren nach Anspruch 1, **dadurch gekennzeichnet, dass** das Verfahren den Schritt des regelmäßigen Überprüfens des Vorhandenseins der mobilen Vorrichtung (1) in dem Fahrzeug (6) mittels dem ersten drahtlosen Daten-übertragungsmittel (2) und/oder dem zweiten drahtlosen Datenübertragungs-mittel (3) umfasst.

10. Verfahren nach Anspruch 1, **dadurch gekennzeichnet, dass** das erste drahtlose Datenübertragungsmittel (2) eine elektronische Vorrichtung (21) in dem Träger (11) umfasst, die in dem Fahrzeug (6) für die mobile Vorrichtung (1) bereit ist.

11. Verfahren nach Anspruch 10, **dadurch gekennzeichnet, dass** das Verfahren den Schritt des Konfigurierens des zweiten drahtlosen Datenübertragungsmittels (3) mittels des ersten drahtlosen Datenübertragungsmittels (2) unter Verwendung von Daten, die von der mobilen Vorrichtung (1) an die elektronische Vorrichtung (21) übertragen werden, umfasst.

12. Verfahren nach Anspruch 11, **dadurch gekennzeichnet, dass** die elektronische Vorrichtung (21) einen zweidimensionalen Code umfasst.

13. Vorrichtung zur Datenübertragung zwischen einem ersten drahtlosen Datenübertragungsmittel (2) oder einem zweiten drahtlosen Datenübertragungsmittel (3) eines Fahrzeugs (6) und einer mobilen Vorrichtung (1); **dadurch gekennzeichnet, dass** die Vorrichtung angepasst ist, um das Verfahren der Ansprüche 1-12 durchzuführen.

## Revendications

1. Procédé de transmission de données entre un premier moyen de transmission de données sans fil (2) et/ou un second moyen de transmission de données sans fil (3) d'un véhicule (6) et un dispositif mobile (1) ; **caractérisé en ce que** le procédé comprend les étapes suivantes :
- la détection du dispositif mobile (1) dans un support (11) du véhicule (6) ;
- l'établissement d'une connexion sans fil initiale (22) entre le premier moyen de transmission de données sans fil (2) et le dispositif mobile (1) en réponse à la détection du dispositif mobile (1) sur le support (11) ;
- la réception d'informations, incluant des informations de configuration, sur la connexion sans fil initiale (22) à partir du dispositif mobile (1) ;
- la transmission des informations de configuration reçues à partir du premier moyen de transmission de données sans fil (2) au second moyen de transmission de données sans fil (3) en utilisant une autre connexion (4) ;
- l'établissement d'une seconde connexion sans fil (32) entre le second moyen de transmission de données sans fil (3) et le dispositif mobile (1) en utilisant les informations de configuration reçues, si le second moyen de transmission de données sans fil (3) est disponible ; et
- après l'établissement de la seconde connexion sans fil, le passage du premier moyen de transmission de données sans fil (2) en attente.

2. Procédé selon la revendication 1, **caractérisé en ce que** le procédé comprend l'étape d'envoi de données du second moyen de transmission de données sans fil (3) au dispositif mobile (1) sur la seconde connexion sans fil établie (32).

3. Procédé selon la revendication 1, **caractérisé en ce que** le premier moyen de transmission de données sans fil (2) est un moyen à bande passante étroite et courte portée et le second moyen de transmission de données sans fil (3) est à large bande passante et longue portée.

4. Procédé selon la revendication 1 ou 3, **caractérisé en ce que** le procédé comprend l'étape de maintien de la connexion sans fil entre le premier moyen de transmission de données sans fil (2) et le dispositif mobile (1), si le second moyen de transmission de données (3) n'est pas disponible.

5. Procédé selon la revendication 3, **caractérisé en ce que** le premier moyen de transmission de données sans fil (2) utilise une NFC et le second moyen de transmission de données sans fil (3) utilise une Wifi.

6. Procédé selon la revendication 1, **caractérisé en ce que** l'autre connexion entre le premier moyen de transmission de données sans fil (2) et le second moyen de transmission de données sans fil (3) est réalisée via un câble (4).

7. Procédé selon la revendication 1 ou 2, **caractérisé en ce que** le procédé comprend l'étape d'affichage d'une information du véhicule (6) au moyen du dispositif mobile (1).

8. Procédé selon la revendication 7, **caractérisé en ce que** le procédé comprend l'étape de sélection, au moyen du dispositif mobile (1), de l'information à recevoir et la fréquence à laquelle cette information est reçue.

9. Procédé selon la revendication 1, **caractérisé en ce que** le procédé comprend l'étape de vérification régulière, par l'intermédiaire du premier moyen de transmission de données sans fil (2) et/ou du second moyen de transmission de données sans fil (3), de la présence du dispositif mobile (1) dans le véhicule (6).

10. Procédé selon la revendication 1, **caractérisé en ce que** le premier moyen de transmission de données sans fil (2) comprend un dispositif électronique (21) dans le support (11) disponible dans le véhicule (6) pour le dispositif mobile (1).

11. Procédé selon la revendication 10, **caractérisé en ce que** le procédé comprend l'étape de configuration du second moyen de transmission de données sans fil (3), par l'intermédiaire du premier moyen de transmission de données sans fil (2), en utilisant des données transmises au dispositif électronique (21) à partir du dispositif mobile (1).

12. Procédé selon la revendication 11, **caractérisé en ce que** le dispositif électronique (21) comprend un code bidimensionnel.

13. Dispositif de transmission de données entre un premier moyen de transmission de données sans fil (2) ou un second moyen de transmission de données sans fil (3) d'un véhicule (6) et un dispositif mobile (1) ; **caractérisé en ce que** le dispositif est adapté pour réaliser le procédé selon les revendications 1 à 12.
